# EUROPEAN PATENT APPLICATION

(11) **EP 4 586 552 A1**
(43) Date of publication of application: **16.07.2025**
(21) Application number: 25150713.3
(22) Date of filing: 08.01.2025
(51) Int. Cl.: H04L 9/40, H04M 3/42, H04L 9/32, H04W 12/06

(54) **PHONE CALL AUTHENTICATION**

(30) Priority: 12.01.2024 FI 20245024
(71) Applicant: Carecode Oy, 00180 Helsinki (FI)
(72) Inventor: Tötterman, Magnus, 00100 Helsinki (FI); Tötterman, Paul, 00300 Helsinki (FI)
(74) Representative: Papula Oy

(57) **Abstract**

The present disclosure relates to a facilitator device (102) for managing a phone call identification authentication process. This device is configured to receive a verification request comprising a caller MSISDN associated with a client device. In response to the verification request, the facilitator device sends a push notification to the client device. This notification includes a first Uniform Resource Identifier (URI) associated with the facilitator for a first request. The facilitator device then receives the first request from the client device, which comprises a request to start an authentication process using third-party authentication. In response to the first request, the facilitator device sends a first response to the client device, including a second URI associated with a third-party authentication service used for starting the third-party authentication process. The facilitator device then receives an authentication response from the client device, which comprises the status of the finished authentication process. In response to the authentication response, the facilitator device sends an authentication verification response, which includes the status of the finished authentication process.

## Description

### FIELD OF THE DISCLOSURE

The present disclosure relates to the technical field of telecommunications. More specifically the disclosure relates to the management of phone call identification authentication processes.

### BACKGROUND OF THE DISCLOSURE

The telecommunication field has seen tremendous progress in the past few decades, with various technologies facilitating connectivity and communication like never before. One such aspect that is of paramount importance is the process of identifying and authenticating phone calls. In a world that relies heavily on digital communications, it becomes critical to ensure the identity of the caller for securing sensitive information and protection against fraud. Therefore, effective management of a phone call identification authentication process is crucial.

Traditionally, phone call identification used rudimentary methods such as Caller ID (CID) where the telephone number of the calling party was delivered to the called party's telephone equipment during the ringing signal or when the call was being set up but before it was answered. This conventional method has several limitations and significant security vulnerabilities because it could be manipulated or spoofed.

To overcome these limitations, more advanced features such as third-party authentication services were introduced. In a third-party authentication an external entity validates user's access rights and/or credentials on behalf of the service provider. Though this process has significantly improved over time, there are still challenges associated with third-party systems including latency issues due to multiple interactions between different systems and potential lack of interoperability among diverse networks.

In a traditional client authentication process during an ordinary voice phone call, the service provider does not have previous information about the device the client may use for the process. This generally requires the use of a third-party application or an IDP server to manage the authentication process, and an external facilitator that sends the HTTP response to the client, before the process may be started. In an example, a client calls a banking service, which provides a third-party application that comprises the authentication process. The authentication process may require the use of a PIN-code, a password, or a serial number from a physical card the bank service has previously provided. When, during a phone call, the agent asks the client to open the third-party application to process the verification, the third-party application server may lie out of scope of the bank service. Any out of scope processes might be vulnerable to a phishing attack for a fourth-party agent.

US2023/050098 discloses Apparatus and methods for enhancing security of an authentication process of a caller that initiated a call in an Interactive Voice Response ("IVR") system. The methods may include routing the call through the IVR system to a headset. After the routing, the methods may include retrieving data associated with the caller. In response to the retrieved data meeting one or more predetermined conditions, a graphical user interface of an agent computer paired to the headset may display a plurality of validation information for validating the caller. Selection by the agent of validation information may trigger methods for transmitting a request to the caller, via a caller mobile phone, to input the validation information selected by the agent. The methods may additionally include authenticating the caller based at least in part on the information input into the mobile phone. A Drawback of the solution is that it includes use of a secure application that needs to be installed to the client device.

EP3425543 discloses a solution for the problem, wherein, in general, different user IDs and passwords are set for different systems. For a password in particular, it is required to set information that is difficult for others to estimate. Accordingly, since a user needs to keep track of user ID and password information for each system the user uses, a management burden on the user accompanying user authentication grows as the number of systems the user uses increases.

### SUMMARY

The present disclosure relates to a facilitator device for managing a phone call identification authentication process. This device is configured to receive a verification request comprising a caller MSISDN associated with a client device. In response to the verification request, the facilitator device sends a push notification to the client device. This notification includes a first Uniform Resource Identifier (URI) associated with the facilitator for a first request. The facilitator device then receives the first request from the client device, which comprises a request used to start an authentication process using third-party authentication. In response to the first request, the facilitator device sends a first response to the client device, including a second URI associated with a third-party authentication service used for starting the third-party authentication process. The facilitator device then receives an authentication response from the client device, which comprises the status of the finished authentication process. In response to the authentication response, the facilitator device sends an authentication verification response, which includes the status of the finished authentication process. The facilitator device may be implemented as a separate and independent physical device or as a computer program that is executed in a computing device, cloud service, data service center or the like.

Furthermore, an objective of a phone call authentication arrangement is to provide a facilitator device and method for managing a phone call identification authentication process that offers a secure and convenient way for authenticating an individual during a phone call. Particularly, the phone call authentication arrangement leverages trusted third-party authentication services to enhance security.

The phone call authentication arrangement involves a facilitator device designed for managing the process of phone call identification authentication. The device is configured to receive a verification request which includes a Mobile Station International Subscriber Directory Number (MSISDN) or a similar identifier that can be associated with a client device. Upon receiving the verification request, the facilitator device sends a push notification to the client device identified by the caller MSISDN. This push notification contains a first Uniform Resource Identifier (URI) associated with the facilitator for initiating an authentication process using third-party services.

Once the first request from the client device is received, which includes a request to start an authentication process using third-party services, the facilitator device responds by sending back a first response containing a second URI associated with a third-party authentication service to initiate the third-party authentication process. After concluding this process, the client device sends back an authentication response indicating its status. In response to this authentication response, an authentication verification response is sent out by the facilitator device, which also indicates the status of the finished authentication process.

In some configurations, communication between the facilitator device and client devices can be facilitated through SMS or Rich Communication Services (RCS) messaging. This provides a possibility to identify the used device in addition to the user of the device.

In certain configurations, sender ID protection may be employed when sending messages from facilitator devices to client devices. This feature enhances security by preventing unauthorized access or misuse of sender IDs, thereby protecting integrity of communications.

Furthermore, in some cases, the first URI is sent only to specific client devices while preventing their access otherwise. This ensures that only authorized devices have access to the firstURI, further enhancing security during communications.

The validity of push notifications can be set for specified time intervals in some instances. These intervals could be associated with delivery times of push notifications or validity times of the first URI, ensuring timely execution and completion of processes involved in phone call identification authentication.

The facilitator device could also retrieve unique identifiers associated with client devices from mobile communication networks and store them for future reference or use.

The phone call authentication arrangement also extends into systems designed for phone call identification authentication comprising facilitator devices as described above along with agents using agent devices and clients using their respective devices. Agents receive phone calls from clients and based on their phone numbers send out verification requests while receiving authentication verifications from facilitators. Clients on the other hand receive push notifications, send out first requests, receive first responses, execute third-party authentication processes and finally send out the authentication response indicating the status after completion of these processes.

In some configurations, clients may be set up specifically to handle messages only from predetermined senders, ensuring that they interact exclusively with trusted sources, thereby enhancing overall system security.

Finally, the phone call authentication arrangement covers methods involving management of phone call identification authentications using facilitators, where steps similar to those described above are executed including receipt and sending out of verification requests as well as responses between different components involved in these systems.

Moreover, computer programs comprising program codes configured specifically for executing methods described above when run on computing devices form part of the phone call authentication arrangement, offering flexibility in terms of application platforms where these methods can be implemented.

In summary, the phone call authentication arrangement provides a secure and convenient solution for managing phone call identification authentication processes leveraging trusted third-party services, enhancing overall security while offering flexibility in terms of communication mediums used and application platforms where these methods can be implemented. The above-described example provides the service provider an authentication verification process that does not feature any third-party application, or any IDP (identity provider) that lies beyond the scope of the service provider. The third-party verification process that may be used, such as WebAuthn, may generate a one-time secure key-pair (private and public) that are secure against any outside phishing attacks, as no static password is required for such a verification process.

### BRIEF DESCRIPTION OF THE DRAWINGS

The accompanying drawings, which are included to provide a further understanding of the phone call authentication arrangement and constitute a part of this specification, illustrate examples of the phone call authentication arrangement and together with the description help to explain the principles of the phone call authentication arrangement. In the drawings:
**Fig. 1** is a block diagram of an example of a phone call authentication arrangement; and
**Fig. 2** is a signaling chart of an example implementation of the phone call authentication arrangement.

### DETAILED DESCRIPTION

Reference will now be made in detail to the example implementations of a phone call authentication arrangement, examples of which are illustrated in the accompanying drawings.

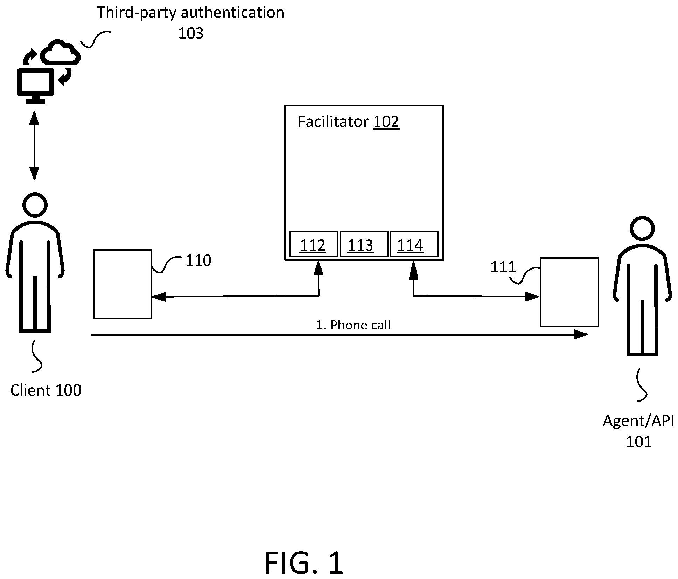

In figure 1 a block diagram of an arrangement for phone call authentication is presented. In the arrangement there is a facilitator device 102 between the client 100 and an agent 101. The present arrangement is used for authenticating the calling person in an application where the agent needs to know the correct identity of the client. The reason for the need varies; however, sometimes it is necessary to only authenticate the person. In some other applications it may be necessary to retrieve additional access information using the authenticated identity. The present arrangement provides a possibility to do the authentication in a manner that is easy to implement for agents and that provides trusted authentication, which will be performed by a trusted third-party authentication entity 103.

In the arrangement the client 100 has a client device 110 and the agent 101 has an agent device 111. The client device and the agent device may be, for example, mobile phones, tablet computers or ordinary computers that are capable of receiving and sending messages to each other. Furthermore, the client device and the agent device are capable of managing a telephone call during which the authentication is performed. Typically the client device 110 is a mobile phone and the agent device can be a special purpose set or a computer with a headset so that the agent can work conveniently and efficiently using a keyboard.

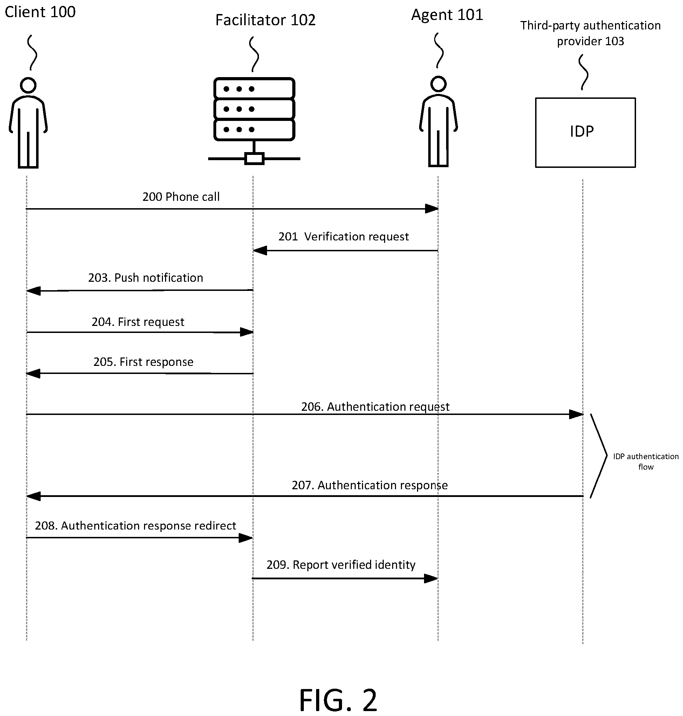

When, during a phone call, a need for authentication emerges, a facilitator device 102 is used as explained with reference to the signaling chart of figure 2. The facilitator device may be a separate device or an entity in a cloud computing arrangement or a similar computing center. The facilitator device comprises or has access to at least one processor 112, at least one memory 113 and at least one network interface 114. The network interface may be connected to the internet and additionally to other networks. For example, if the messages are transmitted using SMS messages of a mobile network, the facilitator device 102 may receive and send the messages through an internet interface or a mobile network interface.

The at least one processor 112 is capable of executing a computer program or a program code that is configured to perform a method for implementing a phone call authentication process. The at least one memory 113 is configured to store the computer program or the program code and the necessary data.

Figure 2 discloses a signaling chart of an example of a phone call authentication process using a phone call authentication arrangement similar to the example of figure 1. In the process, first the client 100 places an ordinary phone call to an agent 101. When a need for authentication emerges, the agent sends a verification request 201 to a facilitator 102. The facilitator 102 is configured to receive the verification request 201. The verification request comprises a caller MSISDN. The caller MSDISN is used as an address for where the verification request 201 will be forwarded from the facilitator 102.

After receiving the verification request, the facilitator 102 is configured to send a push notification 203 to the device identified by the caller MSISDN. The push notification comprises a first uniform resource identifier (URI) associated with the facilitator for a first request. The first URI is used for contacting the facilitator device 102. Other similar identifiers may also be used for contacting the facilitator device 102. Furthermore, the facilitator is then configured to receive a first request 204 from the device identified by the caller MSISDN. The first request comprises a request to start an authentication process using a third-party authentication provider 103. The third-party authentication may be using a modern protocol standard, such as WebAuthn. In response to the first request, the facilitator 102 is configured to send a first response 205 back to the device identified by the caller MSISDN.

The first response comprises a second URI associated with a third-party authentication service to start the third-party authentication process 206. The second URI is used for initiating the third-party authentication service. Other similar identifiers may also be used for contacting the third-party authentication service. When the third-party authentication process is finished, the client 100 receives an authentication response 207, which is then redirected 208 to the facilitator 102. The facilitator is configured to receive the redirected authentication response 208. The authentication response comprises the outcome of the finished authentication process. Finally, in response to the received authentication response, the facilitator 102 is configured to send an authentication verification response 208, the authentication verification response comprising the status of the finished authentication process. The signaling shown in figure 2 may use any suitable protocol. One common choice for the protocol is HTTP, which is widely used.

The above-described example provides the service provider, which is the agent 101, a possibility to use an authentication process that does not feature any third-party application, or any IDP (identity provider) that lies beyond the scope of the service provider. The third-party verification process that may be used, such as WebAuthn, may generate a one-time secure key-pair (private and public) that are secure against any outside phishing attacks, as no static password is required for such a verification process.

In a further example the push notification discussed above may be an SMS or RCS message. Using these message types, the receipt of the push-notification is tied to a particular mobile device. Thus, in addition to the user, also the device used may be identified. Optionally, the SMS or RCS message may be sent using sender ID protection. This enables the possibility of increasing security by using trusted senders and/or alphanumeric sender fields. This may be further improved by implementing a register of trusted senders in the client device; however, this is not necessary, and the present phone call authentication arrangement works without making changes to client devices. The security may be further improved by associating the validity of the push notification to a time interval and/or delivery time. If the push notification is not delivered fast enough or if the URI is not used within a predetermined time period, the push notification may be considered invalid.

The facilitator device may retrieve a unique identifier of the client device. An example of such an identifier is the IMSI code, which is the International Mobile Subscriber Identity number. This is a unique identifier that is broadcasted when the phone is powered on, and it is stored on the SIM card (Subscriber Identity Module) used in the mobile phone. This unique identifier may also be tied with a time interval, and it may be used, for example, when a call is dropped and immediately re-established. In such a case it is possible to assume that the person and the phone are still the same, even if a new third-party authentication process was not performed.

In an implementation the used uniform resource identifier may be submitted only in the push notification. Thus, it cannot be accessed otherwise through an API or other similar means.

In the examples above a specific sequence is given without the details of contents of authentication messages. A person skilled in the art understands that the specific content of each message is dependent on the authentication provider. The authentication provider may use different standards and protocols, and the used standards and protocols may provide some flexibility in implementing the authentication service, for example, by providing optional parametrization. The same applies even if the authentication provider does not provide a solution according to universal standards but has a legacy solution. In such cases the authentication provider has determined how the authentication service works and provided necessary information to the users. Thus, the present arrangement is suitable for several different authentication mechanisms, the main requirement being a capability of authenticating a person during a phone call.

One example of a standard is OpenID, which is an open standard and decentralized authentication protocol maintained by a non-profit OpenID foundation. It provides a possibility to authenticate users using a third-party identity provider. OpenID is widely used and known to persons skilled in the art.

Another option is a SAML 2.0 standard that is maintained by the Organization for the Advancement of Structured Information Standards (OASIS). SAML standard defines mechanisms for identifying a human user. It is not limited to a particular authentication mechanism at the identity provider.

In the above one example of signaling has been explained in detail, however, the present arrangement may be implemented also otherwise. For example, the authentication response and the report of verified identity may contain a link, or a third URI, that the agent accesses. This provides a connection between the agent and the authentication provider. The link is formulated to provide an additional layer of security so that the agent can receive the confirmation of the identity directly from the authentication provider.

Thus, the facilitator described above and the method of using the facilitator can be adapted to use several different authentication mechanisms and the provider of the authentication mechanism defines the protocol used for the communication and which data is transmitted in the messages relating to the authentication.

It is obvious to a person skilled in the art that with the advancement of technology, the basic idea of the phone call authentication arrangement may be implemented in various ways. The phone call authentication arrangement is thus not limited to the examples described above; instead they may vary within the scope of the claims.

## Claims

1. A facilitator device (102) for managing a phone call identification authentication process, configured to:
receive a verification request (202), the verification request comprising a caller MSISDN associated with a client device;
in response to the verification request, send a push notification (203) to the client device identified by the caller MSISDN, the push notification comprising a first Uniform Resource Identifier (URI) associated with the facilitator for a first request;
receive the first request (204) from the client device, the first request comprising a request to start an authentication process using third-party authentication;
in response to the first request, send a first response (205) to the client device, the first response comprising a second URI associated with a third-party authentication service used for starting the third-party authentication process (206);
receive an authentication response (207) from the client device, the authentication response comprising the status of the finished authentication process; and
in response to the authentication response, send an authentication verification response (208), the authentication verification response comprising the status of the finished authentication process.

2. A facilitator device according to claim 1, wherein the facilitator device (102) is configured to communicate with the client device using SMS or RCS messaging.

3. A facilitator device according to claim 2, wherein the facilitator device is configured to use sender ID protection when sending messages to the client device.

4. A facilitator device according to any of claims 1 - 3, wherein the facilitator device is further configured to send the first URI only to the client device and to prevent access to the URI otherwise.

5. A facilitator device according to any of preceding claims 1 - 4, wherein the validity of the push notification is set for a specified time interval.

6. A facilitator device according to claim 5, wherein the time interval is associated with the delivery time of the push notification.

7. A facilitator device according to claim 5, wherein the time interval is associated with the validity time of the first URI.

8. A facilitator device according to any of preceding claims 1 - 7, wherein the facilitator device is configured to: retrieve a unique identifier of the client device from the mobile communication network and store the retrieved identifier for future reference of the client device.

9. A system for authentication during a phone call, comprising:
the facilitator (102) device according to claim 1;
an agent device (111), configured to:
receive a phone call (201) from a client (100) using a client device (110); and based on the client phone number, send a verification request (202); and
receive an authentication verification (8) from the facilitator; and
the client device (100), configured to:
receive a push notification (203)
send a first request (204) the first request comprising a request to start an authentication process using third-party authentication;
receive a first response (205) the first response comprising a second URI associated with a third-party authentication service used for starting the third-party authentication process (206);
execute a third-party authentication process (207); and
send an authentication response (208) the authentication verification response comprising the status of the finished authentication process.

10. A system according to claim 9, wherein the client is configured to process messages only from predetermined senders.

11. A method for managing a phone call identification authentication process using a facilitator, the method comprising:
receiving a verification request (202), the verification request comprising a caller MSISDN associated with a client device;
in response to the verification request, sending a push notification (203) to the client device identified by the caller MSISDN, the push notification comprising a first Uniform Resource Identifier (URI) associated with the facilitator for a first request;
receiving the first request (204) from the client device, the first request comprising a request to start an authentication process using third-party authentication;
in response to the first request, sending a first response (205) to the client device, the first response comprising a second URI associated with a third-party authentication service used for starting the third-party authentication process (206);
receiving an authentication response (207) from the client device, the authentication response comprising the status of the finished authentication process; and
in response to the authentication response, sending an authentication verification response (208), the authentication verification response comprising the status of the finished authentication process.

12. A method according to claim 11, wherein communicating between the facilitator and the client device is performed using SMS or RCS messaging.

13. A method according to claim 11 or 12, wherein the first URI is sent only to the client device and access to the URI is otherwise prevented.

14. A method according to any of preceding claims 11 - 13, wherein the facilitator device is configured to: retrieve a unique identifier of the client device from the mobile communication network and store the retrieved identifier for future reference of the client device.

15. A method according to any of preceding claims 11 - 14, wherein the method further comprises:
receiving the phone call (201) from a client using a client device at an agent; and
based on the client phone number, sending the verification request (202); and
receiving the authentication verification (208) from the facilitator; and
receiving the push notification at a client device (203);
sending the first request (204);
receiving the first response (205);
executing a third-party authentication process (206); and
sending the authentication response (207).
